# EUROPÄISCHE PATENTSCHRIFT

(11) **EP 0 835 331 B1**
(45) Veröffentlichungstag und Bekanntmachung des Hinweises auf die Patenterteilung: **03.01.2001**
(21) Anmeldenummer: 96926959.6
(22) Anmeldetag: 27.06.1996
(51) Int. Cl.: C23C 8/22, B23D 61/02, B23D 61/12

(54) **BASISMATERIAL FÜR DIE HERSTELLUNG VON STAMMBLÄTTERN FÜR KREISSÄGEN, TRENNSCHEIBEN, GATTERSÄGEN SOWIE SCHNEID- UND SCHABVORRICHTUNGEN**
BASE MATERIAL FOR PRODUCING BLADES FOR CIRCULAR SAWS, CUTTING-OFF WHEELS, MILL SAWS AS WELL AS CUTTING AND SCRAPING DEVICES
MATERIAU DE BASE UTILISE POUR PRODUIRE DES LAMES D'ORIGINE POUR SCIES CIRCULAIRES, MEULES TRON ONNEUSES, SCIES ALTERNATIVES A CADRE, AINSI QUE POUR DISPOSITIFS DE COUPE ET DE RACLAGE

(30) Priorität: 30.06.1995 EP 95110279
(43) Veröffentlichungstag der Anmeldung: 15.04.1998
(73) Patentinhaber: CARL AUG. PICARD GMBH & CO. KG., D-42857 Remscheid (DE)
(72) Erfinder: DEIMEL, Hans, Joachim, D-42859 Remscheid (DE)
(74) Vertreter: Zapf, Christoph, Dipl.-Ing.
(86) Internationale Anmeldenummer: EP9602825
(87) Internationale Veröffentlichungsnummer: WO9702367

(56) Entgegenhaltungen:
- EP-A- 0 024 106
- AT-A- 372 709
- DE-A- 4 227 447
- FR-A- 2 236 016
- GB-A- 1 559 690
- US-A- 2 513 713
- HAERTEREI TECHNISCHE MITTEILUNGEN, Bd. 50, März 1995 - April 1995, MUNCHEN DE, Seiten 86-92, XP000504137 F.HOFFMANN ET AL: "DER AUFKOHLUNGSVORGANG" in der Anmeldung erwähnt
- HAERTEREI TECHNISCHE MITTEILUNGEN, Bd. 45, März 1990 - April 1990, MUNCHEN DE, Seiten 129-132, XP000128579 A.MELBER ET AL: "NUMERISCHE SIMULATION DER AUFKOHLUNG VON STAHL UNTER BERÜSICHTIGUNG DER BAUTEILGEOMETRIE"

## Beschreibung

Die Erfindung betrifft ein Basismaterial für die Herstellung von Stammblättern insbesondere für Kreissägen, Trennscheiben, Gattersägen sowie für Schneide- und Schabvorrichtungen, in form einer Tafel, bestehend aus einem ausgehend von ihrer aus zwei Deckflächen, zwei Stirnkantenflächen und zwei Längskantenflächen gebildeten Oberfläche mit Kohlenstoff angereicherten Basisstahl, wobei der Basisstahl einen Grundkohlenstoffgehalt von weniger als 0,3 Ma.-% Kohlenstoff besitzt.

Es ist bekannt, zur Herstellung eines Basismaterials für Stammblätter, insbesondere für Kreissägen, Trennscheiben, Gattersägen sowie Schneid- und Schabvorrichtungen, üblicherweise Werkzeugstähle mit einem Kohlenstoffgehalt zwischen 0,5 und 1,0 Masseprozent oder niedriglegierte Baustähle (als Vergütungsstähle) zu verwenden. Die Wärmebehandlung dieser Werkstoffe erfolgt dabei mit der Zielsetzung, ein homogenes Gefüge und eine gleichmäßig hohe Härte über den gesamten Dickenbereich zu erzielen. Die notwendige Zähigkeit des Basismaterials wird durch eine gezielte Anlaßbehandlung erreicht, wobei diese jedoch zwangsläufig mit Härteeinbußen verbunden ist. Je nach Verwendungszweck und spezifischer Belastung des Basismaterials, beispielsweise für Sägen, werden heute Härten zwischen etwa 37 und 50 HRC gefertigt.

Insbesondere beim Warmwalzprozeß eines üblicherweise eingesetzten Werkzeug- oder Vergütungsstahls und bei seiner Austenitisierungsbehandlung für das Härten diffundiert der Kohlenstoff aus der Randschicht des Werkstoffes heraus. Es kommt zu einer Entkohlung der Oberfläche, so daß nach der Wärmebehandlung die entkohlte, eine niedrige Härte aufweisende Randschicht abgeschliffen werden muß.

Zur Erhöhung der Standzeit wird eine große Anzahl von Sägen hartverchromt, mit Hartmetall oder Diamant bestückt oder stellitiert. Die Bestückung erfolgt durch Löten oder Sintern. Diese Maßnahmen führen zu deutlichen Standzeitverbesserungen, ohne jedoch die Eigenfestigkeit der Stammblätter zu beeinflussen. Durch die Maßnahmen zur Standzeitverbesserung werden die Fertigungskosten dieser Sägen deutlich erhöht. Dies führt zwangsläufig zu einer Reduktion der Zähne bzw. Segmentzahl, wodurch sich die Schnittgüte verschlechtert und die Schallemission erhöht.

Aus der Firmenschrift: "Sie + Wir" der Stahlwerke Südwestfalen, Heft 14/1975, sind Fertigungswege für verschiedene Sägetypen beschrieben, wobei darauf hingewiesen wird, daß stets die Forderung nach einem möglichst spannungsarmen und planen Blech mit geringen Entkohlungswerten und homogener Gefügeausbildung gestellt wird. Die eingesetzten Stähle müssen nach dem Härten und Anlassen ein sehr feinkörniges Gefüge mit guter Zähigkeit aufweisen, damit die auftretenden hohen Flieh- und Zerspankräfte sicher aufgefangen werden.

Die Typisierung der Sägen in der genannten Firmenschrift stützt sich auf eine übliche, entsprechend dem zu bearbeitenden Schneidgut vorgenommene Unterteilung in drei Gruppen. Je nach der Schneidgut-Gruppe werden unterschiedliche Anforderungen an die Eigenschaften der Sägen gestellt. Diese Gruppen sind:
1. Sägen für Holz und Kunststoff (Holzkreissägen, hartmetallbestückte Kreissägen, Forst- und Gattersägen) ;
2. Sägen für Metall (Segmentkreissägen, Trennsägen, Warmkreissägen);
3. Sägen für Gestein (Diamant-Kreissägen, Diamant-Gattersägen) .

Eine der Anforderungen an Sägeblätter ist das Vorhandensein einer hohen Biegesteifigkeit bzw. Formstabilität. Zur Stabilisierung von Gatter-, Band-, Kreis- und Schnelltrennsägeblättern sowie Diamantscheiben, insbesondere zum Ausgleich von durch ungleichmäßige Erwärmung im Werkzeugkörper hervorgerufenen Spannungen, besteht eine bekannte Verfahrensweise darin, in bestimmten Zonen durch Spannen des Blattes gezielt Eigenspannungen hervorzurufen ("Vergleichende Untersuchungen über das Spannen von Kreissägeblättern mit Maschinen und Richthämmern" in Sonderdruck aus "Holz als Roh- und Werkstoff", Bd. 21 (1963), S. 135-144). Eine derartige Eigenspannungserzeugung kann in gehärteten Stahlscheiben oder -bändern durch Kaltschlagen mit dem Hammer oder maschinell durch Walzen oder Drücken vorgenommen werden, stellt aber in jedem Fall einen aufwendigen Bearbeitungschritt bei der Fertigung dar.

Die thermochemische Anreicherung von Eisen- und Stahlwerkstoffen mit Kohlenstoff ist an sich seit langem bekannt und wird als Aufkohlen bezeichnet. Wenn gleichzeitig Stickstoff in den Werkstoff eingebracht wird, spricht man von Carbonitrieren. Einen Überblick über das Aufkohlen vermittelt beispielsweise der Artikel "Der Aufkohlungsvorgang" in Härterei Technische Mitteilungen, Bd. 50 (1995) 2, S. 86-92. Das Aufkohlen kann in einem gasförmigen Medium, im Salzbad oder in Pulver geschehen und wird im allgemeinen bei Temperaturen zwischen 900 und 1000 °C vorgenommen. Als Kohlenstoffspender dienen dabei Mittel, deren Kohlenstoffaktivität höher sein muß als die des Eisenwerkstoffs. Der vom Spender abgegebene Kohlenstoff diffundiert in die Randschicht des aufzukohlenden Werkstücks. Entsprechend den gewählten Prozeßparametern, wie Temperatur und Behandlungszeit, sowie der Kohlenstoffaktivität des Spenders und der Zusammensetzung des Eisenwerkstoffs stellt sich ein charakteristisches Kohlenstoff-Konzentrationsprofil ein. Mit zunehmendem Abstand vom Rand sinkt der Kohlenstoffgehalt ab, bis er im Werkstoffinneren das Ausgangsniveau des Werkstoffs erreicht. Als charakteristische und für die Praxis bedeutsame Kenngröße ist dabei die Aufkohlungstiefe Aₜ anzusehen. Die Aufkohlungstiefe Aₜ ist als der senkrechte Abstand von der Oberfläche bis zu einer die Dicke der mit Kohlenstoff angereicherten Schicht kennzeichnenden Grenze definiert. Die Konzentration, bei der diese Grenze angenommen wird, unterliegt der Normung (vgl. DIN EN 10 052) und wird üblicherweise mit 0,35 Ma.-% Kohlenstoff vereinbart. Mit steigender Aufkohlungsdauer nimmt die Aufkohlungstiefe Aₜ uu, wobei auch die Geometrie des Werkstücks eine Rolle spielt. So kommt es bei konvex gekrümmten Werkstückoberflächen, an Kanten oder Spitzen zu einer größeren Aufkohlungstiefe Aₜ, da dem allseitig eindiffundierenden Kohlenstoff ein vergleichsweise geringeres Volumen zur Verfügung steht. Dadurch kann es zu einer Überkohlung kommen, die durch die Ausscheidung von Carbiden bzw. nach dem Härten durch einen unerwünschten erhöhten Restaustenitgehalt gekennzeichnet ist. Der Artikel stellt eine theoretische Abhandlung dar, in der Berechnungen zum Kohlenstoffkonzentrationsprofil in aufgekohlten Eisen- und Stahlwerkstoffen, die von verschiedenen Autoren durchgeführt wurden, in einer Zusammenschau summarisch vereinigt sind. Inwieweit die dabei aufgestellten mathematischen Modelle auf experimentellen Untersuchungen an tatsächlichen Werkstücken basieren und mit der Realität übereinstimmen, ist dem Artikel ohne Kenntnis der Sekundärliteratur nicht zu entnehmen. Die Autoren des Artikels stützen sich auf eine Vielzahl unterschiedlicher Quellen, wobei nicht vorausgesetzt werden kann, daß die jeweiligen Ergebnisse des einen Autors unter den gleichen Bedingungen gewonnen wurden, wie die Ergebnisse eines anderen Autors bzw. anderer Autoren und daher aufeinander übertragbar sind. Insbesondere wird bei der mathematischen Modellierung von vereinfachten Voraussetzungen ausgegangen, die in der Praxis so nicht erfüllt sind. Es wird daher auch nur der Anspruch erhoben, Anhaltswerte für die Abschätzung verschiedener Größen, wie z.B. der Einsatzhärtungstiefe, anzugeben. Randent- und -überkohlungsvorgänge sowie die Erscheinungen beim Härten und Anlassen werden in den mathematischen Modellen ungenügend bzw. gar nicht berücksichtigt. Insbesondere wird bei den mit "Platte" bezeichneten Geometrien eine Abstraktion von der realen Bauteilgeometrie vorgenommen, indem beim Aufkohlungsvorgang beispielsweise nur eine ebene Fläche bzw. ein halbunendlicher Raum betrachtet werden. Weder wird ein Basismaterial in Form einer Tafel, wie es eingangs genannt ist, beschrieben, noch ist dem Artikel grundsätzlich eine Eignung von aufgekohlten Werkstoffen oder Eignungskriterien für irgendeinen Anwendungszweck zu entnehmen. Eine gewerbliche Anwendbarkeit der dargestellten Ergebnisse im Hinblick auf eine Übertragung auf das eingangs genannte Basismaterial oder gar Korrelationen zu den für Stammblättern von Trenn-, Schneide- und Schabvorrichtungen zu fordernden Kenngrößen sind nicht erkennbar.

Aus der DE-OS 24 31 797 ist ein gattungsgemäßes Verfahren zur Herstellung von hochlegiertem Bandstahl bekannt geworden, der als Schnellschnitt- und Werkzeugstahl unter anderem zum Zwecke der Fertigung flexibler Klingen bzw. Schneiden eingesetzt wird, wie sie beispielsweise an Rasierklingen oder Metallsägeblättern zu finden sind. Der hohe Gehalt an Legierungselementen und die Art der Legierungselemente, z.B. von 12 -13 Ma.-% Chrom, wodurch eine hohe Warmhärte erreicht werden kann, entspricht diesem, gemäß der obigen Einteilung der zweiten Gruppe zuzuordnenden, Verwendungszweck des Bandstahles für Metallsägen bzw. Rasierklingen. Hochlegierte Stähle mit zusätzlich hohem Kohlenstoffgehalt sind im Herstellungsprozeß beim Warm- und Kaltwalzen schlecht zu verarbeiten, d.h. sie sind riß- und bruchgefährdet. Daher wird ein Bandmaterial mit niedrigem Kohlenstoffgehalt nach dem beschriebenen Verfahren zunächst entweder gesintert oder kaltgewalzt und anschließend vollflächig oder partiell im Schneidenbereich mit Kohlenstoff angereichert. Die Kohlenstoffanreicherung erfolgt über den gesamten Querschnitt bzw. die Dicke des Bandmaterials. Es stellt sich damit über die gesamte, entsprechend dem vorgesehenen Einsatz des Materials geringe, Dicke des Bandstahls eine Kohlenstoff-Konzentration mit nahezu konstantem Verlauf ein, die in ihrer Höhe der Kohlenstoffkonzentration von Werkzeugstählen entspricht.

Aus der AT-PS 372 709 ist ein Schneidwerkzeug, insbesondere eine Säge, aus legiertem Stahl bekannt, das im Bereich seiner Arbeitsflächen bzw. der Zahnung bis zu einer Tiefe von 0,02 bis 0,10 mm mit 1,8 bis 2,2 Ma.-% Kohlenstoff angereichert ist, wobei der Kohlenstoffgehalt in einer Tiefe von 0,15 bis 0,25 mm den Kohlenstoffgehalt der Stahl-Legierung erreicht. Die Stahl-Legierung besteht aus Eisen mit den unvermeidlichen Verunreinigungen und enthält 0,1-0,3 Ma.-% Kohlenstoff, 0,2-2,0 Ma.-% Silicium, 0,2-1,5 Ma.-% Mangan, 5,0-7,0 Ma.-% Chrom, 1,0-2,0 Ma.-% Wolfram, 1,0-2,0 Ma.-% Molybdän, 0-2,0 Ma.-% Vanadium, 0-0,5 Ma.-% Titan, 0-0,5 Ma.-% Niob. Zur Herstellung des Schneidwerkzeugs wird der Werkstück-Rohling, insbesondere das Sägeblatt, einer Aufkohlungsbehandlung bei Temperaturen im Bereich von 850-1050 °C unterworfen, wonach das Härten in Luft, Öl oder im Warmbad erfolgt. Die geringe Aufkohlungstiefe Aₜ und die starke Aufkohlung führen von der Deckfläche zum nicht mit Kohlenstoff angereicherten Bereich hin zur Ausbildung eines mittleren Kohlenstoffgradienten von etwa 6 bis 14 Ma.-% C/mm im Randbereich des Basisstahls. Auf diese Weise soll insbesondere eine Oberflächenschicht mit erhöhter Verschleißfestigkeit erreicht werden. Bei der eingesetzten Legierung handelt es sich um einen Sonderstahl, der vom Gehalt an Legierungselementen her einer Schnellstahllegierung entspricht, ohne allerdings den entsprechend hohen Kohlenstoffgehalt aufzuweisen. Der Kohlenstoffgehalt ist dabei typisch, der hohe Legierungsgehalt jedoch atypisch für Einsatzstähle. Die Verwendung eines solchen Werkstoffes verfolgt das Ziel, durch die angegebene und in der beschriebenen Weise behandelte Legierung Schnellarbeitsstahl zu ersetzen. Auch hier ist - ähnlich wie bei dem Verfahren entsprechend der DE-OS 24 31 797 - außerdem eine Senkung der Herstellungskosten durch Minderung des Ausschußrisikos und eine Materialeinsparung durch Vermeidung eines Übereinsatzes an Bandstahl bei dessen Umformungsvorgängen beabsichtigt. Dabei kann im Werkstück eine hohe Warmhärte erzielt werden, die durch Anlaßtemperaturen von 500 °C und mehr gekennzeichnet ist. Bei der Kernhärte des Werkstoffes ist dabei wie bei Schnellarbeitstählen von einem Wert von ca. 45 bis 55 HRC auszugehen.

Ein Nachteil dieses Schneidwerkzeuges und seines Herstellungsverfahrens besteht darin, daß Bandsägen ausdrücklich ausgenommen werden müssen, vermutlich, weil die erforderliche Zug- und Biegewechselfestigkeit nicht erreicht werden kann. Weiterhin werden als Werkstück-Rohlinge z.B. durch Ausstanzen, Fräsen und Schränken der Zähne Stichsägeblätter hergestellt, die erst danach aufgekohlt, gehärtet und angelassen werden. Es muß jedoch davon ausgegangen werden, daß die Sägeblätter nach dieser Behandlung aufgrund des hohen Kohlenstoffgehaltes in der Randschicht nicht mehr schränkbar sind. Durch die von allen Seiten, beispielsweise an den Sä-gezähnen, erfolgende Aufkohlung kann es zudem, wie oben beschrieben, in bestimmten Randbereichen zu einer Überkohlung kommen, die, indem sie zu einer Materialversprödung führt, sich ungünstig auf die Schneideigenschaften und die Festigkeit der Zähne auswirkt.

Der Erfindung liegt die Aufgabe zugrunde, ein gattungsgemäßes Basismaterial anzugeben, mit dem mit hoher Reproduzierbarkeit Stammblätter für Kreissägen, Trennscheiben, Gattersägen sowie Schneid- und Schabvorrichtungen mit erhöhter Bauteilfestigkeit unter Vermeidung der Ausbildung einer entkohlten Randzone hergestellt werden können, wobei zur Erhöhung des Verschleißwiderstandes eine höhere Härte an der Oberfläche bei gleicher Betriebs- bzw. Bruchsicherheit erzielbar ist und die Schallemission im Betriebszustand vermindert ist. Weiterhin sollen aus diesem Basismaterial insbesondere nicht bestückte Sägen für Holz und Kunststoff, wie Holzkreissägen, Forst- und Gattersägen, herstellbar sein, die sich bei geringem Fertigungsaufwand durch eine hohe Lebensdauer auszeichnen.

Diese Aufgabe wird durch ein gattungsgemäßes Basismaterial gelöst, bei dem der Basisstahl infolge einer thermochemischen Behandlung von mindestens einer Deckfläche der Tafel ausgehend mit 0,5 bis 1,1 Ma.-% Kohlenstoff angereicherte Randbereiche aufweist, die bei abfallendem Kohlenstoffgehalt in einen nicht oder nur wenig mit Kohlenstoff angereicherten Bereich übergehen, wobei an den Kantenflächen die aus dem mit Kohlenstoff angereicherten Randbereich und dem nicht mit Kohlenstoff angereicherten Bereich gebildete Sandwichstruktur vorliegt und entsprechend einer ausgewählten Tiefe des mit Kohlenstoff angereicherten Randbereichs nach einem Härten und einem Anlassen des thermochemisch behandelten Basisstahls höchstens etwa 50 % der Dicke der Tafel im wesentlichen die ursprüngliche Härte des Basisstahls oder eine geringfügig höhere Härte aufweisen und mindestens etwa 50 % der Dicke der Tafel eine höhere Härte aufweisen. Die thermochemische Behandlung ist dabei vorzugsweise ein Aufkohlungsprozeß, kann aber auch, wenn das Aufkohlungsmedium Stickstoff oder Stickstoffverbindungen, wie Ammoniak enthält, ein Carbonitrierprozeß sein. Die auf diese Weise im erfindungsgemäßen Basismaterial gebildeten Nitride bewirken eine zusätzliche Erhöhung der Verschleißfestigkeit und wirken einer Werkstoffermüdung entgegen.

Auf diese Weise können die üblicherweise zur Verwendung kommenden Werkzeugstähle mit einem hohen Reinheitsgrad durch das erfindungsgemäße Basismaterial, dessen Basisstahl - vorzugsweise ein niedrig- oder unlegierter Baustahl - diesen Reinheitsforderungen nicht zu entsprechen braucht, ersetzt werden. Sonderstähle sind als Ausgangsmaterialien nicht erforderlich, was eine Reduzierung der Stahlherstellungskosten bedeutet. Mit dem erfindungsgemäßen Basismaterial lassen sich nicht nur eine erhöhte Verschleißfestigkeit an den Deckflächen sondern auch eine höhere Bauteilfestigkeit, beispielsweise gekennzeichnet durch eine höhere Biegefestigkeit, statische Biegesteifigkeit oder Biegewechselfestigkeit, erzielen.

Das Basismaterial kann vorteilhafterweise auch eine Sandwichstruktur besitzen, welche aus einer mit Kohlenstoff angereicherten Deckfläche, einem nicht oder nur geringfügig mit Kohlenstoff angereicherten inneren Kern und einer weiteren mit Kohlenstoff angereicherten Deckfläche des Basisstahls besteht. Diese Struktur liegt nach der Herstellung der Sägen, Trennscheiben oder Schneidvorrichtungen dann auch an den Sägezähnen bzw. den Schneiden vor. Bei wiederholtem Werkzeugeinsatz kommt es daher über die Dicke des Werkstoffes zu einem ungleichmäßigen Verschleiß, und zwar zu einer sog. Auskolkung. Das heißt, daß die harten und verschleißfesten Deckflächen langsamer als der nicht mit Kohlenstoff angereicherte Kern verschleißen, wodurch die Kantenfläche eine konkave Gestalt erhält und am Schneidenbereich eine selbstschärfende Wirkung eintritt.

Es hat sich gezeigt, daß, da die physikalischen Eigenschaften des Basismaterials durch unterschiedliche Kohlenstoffgehalte graduell veränderbar sind, es für die in den Stammblättern zu erzielenden Verschleiß- und Festigkeitseigenschaften von besonderem Vorteil ist, wenn der Quotient aus einer Aufkohlungstiefe Aₜ des Randbereiches des Basismaterials, in welcher der Kohlenstoffgehalt 0,35 Ma.-% beträgt, und aus der Dicke des Basismaterials einen Wert von 0,15 bis 0,40 aufweist. Die Tiefe des aufgekohlten Bereichs kann dabei vorzugsweise so ausgewählt werden, daß nach einem Härten und einem Anlassen des thermochemisch behandelten Basisstahls höchstens etwa 1/3 der Gesamtdicke des Basisstahls im wesentlichen die ursprüngliche Härte des Basisstahls oder eine geringfügig höhere Härte aufweist und mindestens etwa 2/3 der Dicke des Basismaterials eine höhere Härte aufweisen. Vorteilhafterweise liegt nach einem Härten und einem Anlassen die Härte der Deckflächen des Basismaterials im Bereich von etwa 50 bis 63 HRC, vorzugsweise im Bereich von 55 bis 60 HRC, und im nicht mit Kohlenstoff angereicherten Bereich bei 20 bis 40, vorzugsweise bei 30 bis 35 HRC. Die Anreicherung des Basisstahls mit Kohlenstoff erfolgt vorzugsweise beidseitig auf der gesamten Stahlblech-Deckfläche, die Kohlenstoffanreicherung kann jedoch zur ausschließlichen Erzeugung spezieller Eigenschaften im späteren Zahnbereich der Säge beidseitig auch nur partiell durchgeführt werden oder es können Teilbereiche an denen später Lötstellen oder dergleichen vorgesehen sind, von der Kohlenstoffanreicherung ausgenommen werden. Die nicht oder nur geringfügig mit Kohlenstoff angereicherten Bereiche bestehen nach einem Härten und Anlassen aus einem ferritisch-perlitischen Mischgefüge des Rohmaterials und/oder aus Bainit, vorzugsweise in seiner unteren Stufe.

So können bei geringeren Anforderungen an den Basisstahl Sägen hergestellt werden, die aus einem Stahlblech bestehen, das beispielsweise beidseitig, oder auch nur partiell, mittels einer thermochemischen Behandlung, insbesondere einer Aufkohlung, mit Kohlenstoff angereichert ist. Es wurde überraschenderweise festgestellt, daß bei Verwendung eines Basisstahls mit sehr niedrigem Kohlenstoffgehalt von 0,1 bis 0,2 Ma.-% und einem nachfolgendem Aufkohlen sowie Härten und Anlassen, d.h. nach Abschluß der vollständigen Wärmebehandlung, sich Sägen, die, bezogen auf die Dicke und Fläche, keinen linearen Härte-/Festigkeitsverlauf haben, mit verbesserter Qualität herstellen lassen. Der mit Kohlenstoff angereicherte Randbereich des Basisstahls weist dabei günstigerweise von der Deckfläche zum nicht mit Kohlenstoff angereicherten Bereich hin einen mittleren Kohlenstoffgradienten von etwa 0,25 bis 0,75 Ma.-% C/mm, vorzugsweise von 0,40 bis 0,50 Ma.-% C/mm auf.

Während herkömmliche Sägen ein durchgängig martensitisches Gefüge mit homogenen Eigenschaften haben, liegt dieses bei den aus dem erfindungsgemäßen Basismaterial hergestellten Sägen nur an den Oberflächen der mit Kohlenstoff angereicherten Bereiche vor. Die Zähigkeitsanforderungen werden weitestgehend vom weicheren Kern erfüllt, während die Oberfläche mit ihrer Härte - im Fall einer unbestückten oder nicht stellitierten Säge die guten Zerspanungseigenschaften - und die hohe Stabilität der Säge bestimmt.

Wie bereits dargestellt wurde, sind niedrig- oder unlegierte Baustähle als Basistähle für das erfindungsgemäße Basismaterial bevorzugt. So sind sämtliche Stähle, die unlegiert oder legiert als Einsatzstähle verwendet werden können, für das erfindungsgemäße Basismaterials geeignet. Ebenso können Vergütungsstähle mit geringen Kohlenstoffgehalten sowie auch rost- und säurebeständige Stähle mit einem erhöhten Chromgehalt (von 12 bis 13 Ma.-%) benutzt werden. In Tabelle 1 sind beispielhaft solche erfindungsgemäß verwendbare Stähle angegeben, ohne daß die Erfindung jedoch hierauf beschränkt ist.

**Tabelle 1:**

| Mögliche Basistähle für das erfindungsgemäße Basismaterial | | |
|---|---|---|
| Bezeichnung nach DIN 17006 | Bezeichnung nach DIN 17007 | Legierungstyp Ma.-% |
| C 10 | 1.1121 | 0,10 C |
| C 15 | 1.1141 | 0,15 C |
| 15 Cr 3 | 1.7015 | 0,15 C; 0,6 Cr |
| 16 MnCr 5 | 1.7131 | 0,16 C; 1,2 Mn; 0,9 Cr |
| 15 CrNi 6 | 1.5919 | 0,15 C; 1,5 Cr; 1,6 Ni |
| 18 CrNi 8 | 1.5920 | 0,18 C; 2,0 Cr; 2,0 Ni |
| 25 CrMo 4 | 1.7218 | 0,26 C; 1,1 Cr; 0,3 Mo |
| X 10 Cr 13 | 1.4006 | 0,11 C; 13 Cr |

In den Unteransprüchen und in der nachfolgenden Beschreibung sind weitere vorteilhafte Ausführungen der Erfindung enthalten.

Im folgenden wird die Erfindung anhand mehrerer Beispiele unter Bezugnahme auf die beiliegende Zeichnung näher erläutert. Es zeigen:
- Fig. 1: in perspektivischer Darstellung, eine Ansicht einer Tafel eines erfindungsgemäßen Basismaterials für die Herstellung von Stammblättern für Kreissägen, Trennscheiben, Gattersägen sowie Schneid- und Schabvorrichtungen,
- Fig. 2: die vergleichsweise Darstellung der Kohlenstoff-Konzentrationsprofile dreier Qualitäten des erfindungsgemäßen Basismaterials, das unter Verwendung unterschiedlicher Stahlsorten als Basisstahl hergestellt wurde,
- Fig. 3: die vergleichsweise Darstellung der Härteprofile des erfindungsgemäßen Basismaterials aus Fig. 2,
- Fig. 4: die vergleichsweise Darstellung der statischen Biegesteifigkeit eines herkömmlichen Basismaterials aus gehärtetem Werkzeugstahl und eines erfindungsgemäßen Basismaterials bei unterschiedlicher Blechdicke,
- Fig. 5: das Ergebnis eines Biegeversuches an Flachproben eines erfindungsgemäßen Basismaterials in Gestalt eines Kraft-Durchbiegungs-Diagrammes.

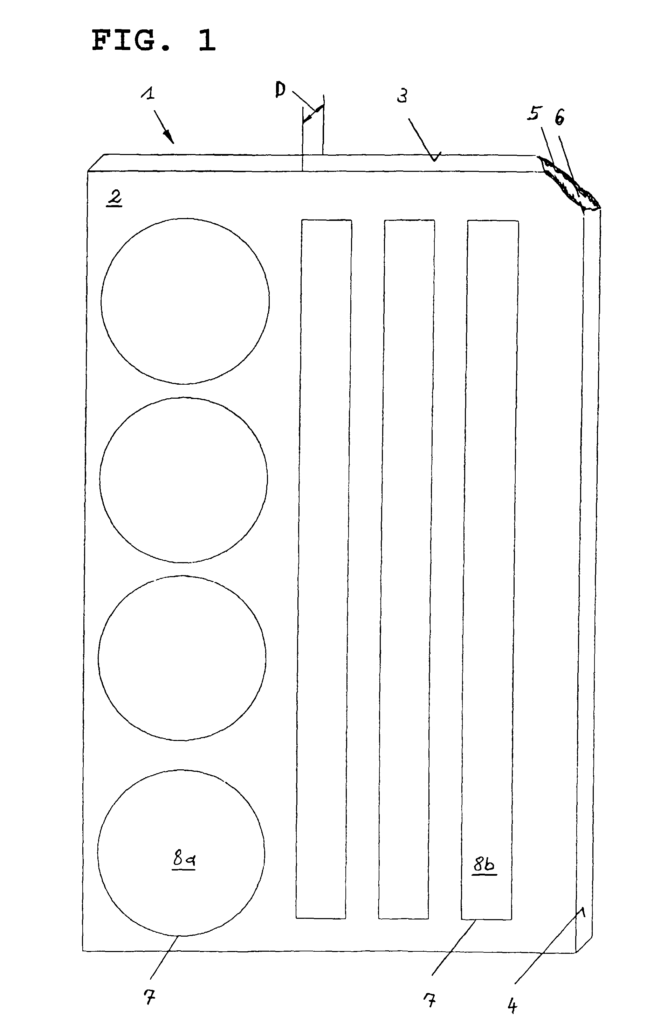

In Fig. 1 ist eine Tafel 1 eines erfindungsgemäßen Basismaterials dargestellt, wie sie für alle im weiteren beschriebenen Ausführungsbeispiele charakteristisch ist. Die Oberfläche der Tafel 1 ist aus zwei Deckflächen 2, sowie jeweils zwei Stirnkantenflächen 3 und zwei Längskantenflächen 4 gebildet. Als Basismaterial für die herzustellenden Stammblätter sind Tafeln 1 dieser Art nach einer thermochemischen Behandlung an den Stirnkantenflächen 3 und den Längskantenflächen 4 beschnitten und werden in dieser Form an den Hersteller ausgeliefert oder der Werkzeughersteller stanzt oder lasert sich die gewünschten Teile daraus derart aus, daß eine Verarbeitung von aufgekohlten Bereichen der Kantenflächen 3, 4 zu Stammblättern vermieden wird. Erfindungsgemäß ist das Basismaterial nur ausgehend von den Deckflächen 2, nicht von den Kantenflächen 3, 4 mit Kohlenstoff angereichert. Infolge der thermochemischen Behandlung weist das Basismaterial von den Deckfläche 2 ausgehend mit 0,5 bis 1,1 Ma.-% Kohlenstoff angereicherte Randbereiche 5 auf, die bei abfallendem Kohlenstoffgehalt in einen nicht mit Kohlenstoff angereicherten Bereich 6 - in diesem Fall aufgrund der beidseitig erfolgten Aufkohlung in einen Kernbereich 6 - übergehen. An den Kantenflächen 3, 4 besitzt das Basismaterial die aus dem mit Kohlenstoff angereicherten Randbereich 5 und dem nicht mit Kohlenstoff angereicherten Bereich 6 gebildete Sandwichstruktur.

In der Darstellung sind bereits die Konturen 7 von Sägeblattrohlingen 8a für Kreissägen und von Sägeblattrohlingen 8b für Gattersägen angedeutet. Zur Herstellung der Tafel 1 des erfindungsgemäßen Basismaterials wurde von einem der nachfolgend angegebenen Basisstähle mit einem Kohlenstoffgehalt von weniger als 0,3 Ma.-% Kohlenstoff ausgegangen.

### Beispiel 1:

- Verwendetes Material:: C 15 Kaltband geglüht
Probendicke: D = 2,5 - 2,7 mm

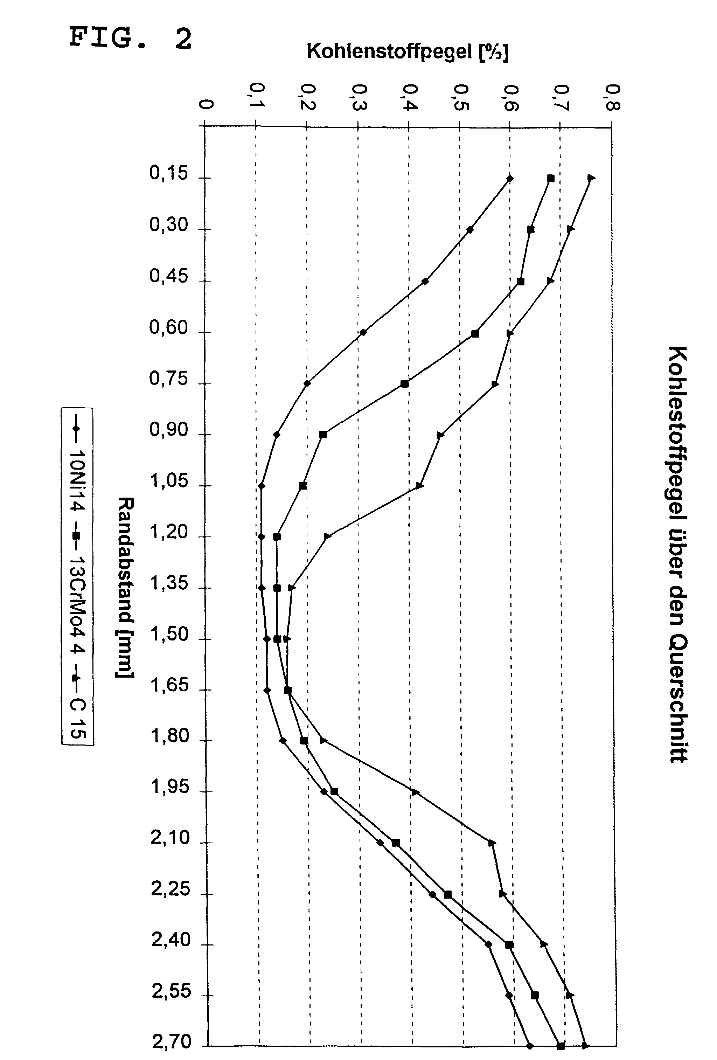

Es wurde an mehreren Proben bei einer Temperatur, die zwischen 880 und 930 °C lag, und einer Behandlungsdauer, die im Zeitraum von 60 bis 90 Minuten lag, eine dünnschichtige Aufkohlung in mit Propan angereicherter Endogasatmosphäre durchgeführt, so daß, wie Fig. 2 zu entnehmen ist, sich jeweils eine Randschicht 5 mit einer bei den verschiedenen Proben von etwa 0,6 bis 1,0 mm streuenden mittleren Eindringtiefe Aₜ von etwa 0,8 mm ergab. Der Quotient aus der Aufkohlungstiefe Aₜ des Randbereiches 5 des thermochemisch behandelten Basisstahls und aus der Dicke D des Basismaterials nahm Werte von 0,15 bis 0,40 an und lag im Mittel bei 0,32. Wie Fig. 2 weiterhin zeigt, lag der Kohlenstoffgehalt unmittelbar an den Deckflächen 2 zwischen 0,7 und 0,8 Ma.-%. Der mit Kohlenstoff angereicherte Randbereich 5 des Basisstahls wies von der Deckfläche 2 zum nicht mit Kohlenstoff angereicherten Bereich 6 hin einen mittleren Kohlenstoffgradienten von etwa 0,30 bis 0,55 Ma.-% C/mm auf.

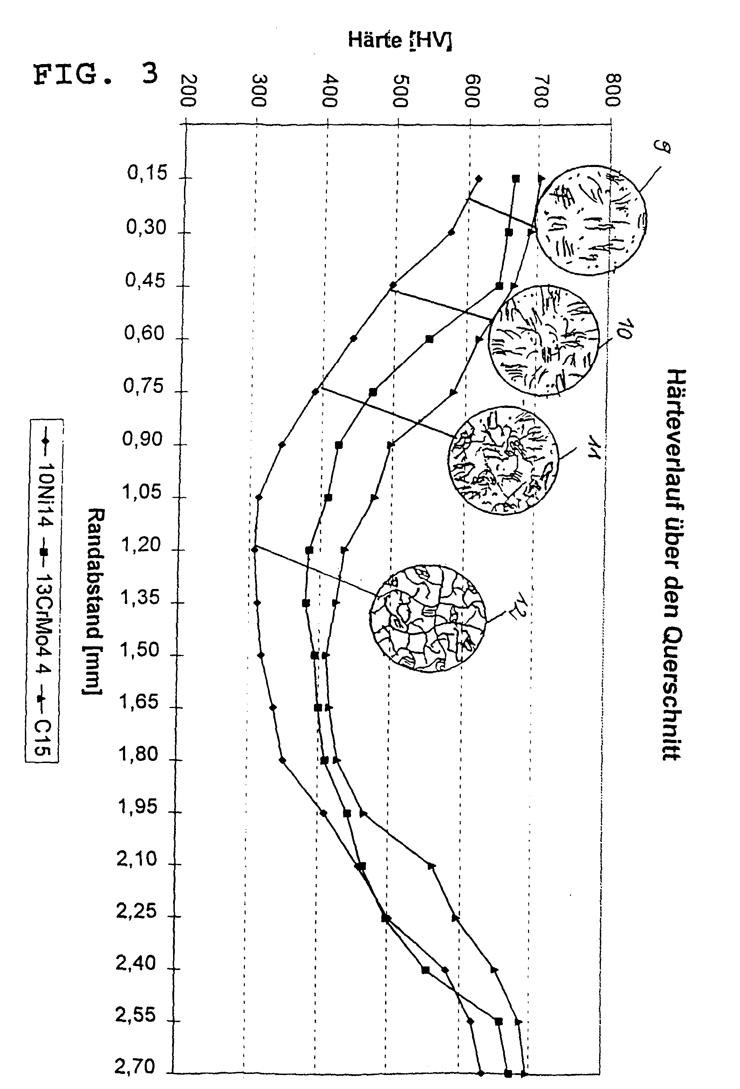

Die nachfolgende, bei einer Temperatur im Bereich von 820 bis 860 °C bei Ölabschreckung durchgeführte Härtung führte bei guter Planheit der Platte 1 des Basismaterials zu Härten von etwa 63 bis 65 HRC auf den Deckflächen 2 bzw. von etwa 44 HRC im Kern 6. Nach einer Anlaßzeit von 3 Stunden bei einer als optimal ermittelten Temperatur von 260° wurden, wie Fig. 3 zeigt, auf der Deckfläche 2 Härtewerte von etwa 56 HRC (700 HV) und im Kern 6 von etwa 40 HRC (400 HV) erreicht. Der mit Kohlenstoff angereicherte Randbereich 5 des Basismaterials wies von der Deckfläche 2 zum nicht oder nur wenig mit Kohlenstoff angereicherten Bereich 6 hin einen mittleren Härtegradienten zwischen etwa 9 bis 15 HRC/mm auf. Bei Vorliegen einer solchen Härteverlaufskurve läßt sich bei Verwendung des Basismaterials für Sägen noch eine Schränkung des Sägezahnes durchführen. Eine aus diesem Basismaterial hergestellte Säge zeichnet sich durch eine hohe Steifigkeit und dynamische Beanspruchbarkeit aus, ist sehr leise und verfügt mit einer um etwa 10 HRC größeren Härte als eine aus dem Stand der Technik bekannten Säge auch über einen sehr guten Verschleißwiderstand. Insbesondere erscheint dieses Basismaterial auch für nicht rotierende Sägen sowie Schneid- und Schabvorrichtungen geeignet.

### Beispiel 2:

- Verwendetes Material:: 13 CrMo 4 4 Kaltband geglüht
Probendicke: D = 2,4 bis 2,7 mm

Es wurde an mehreren Proben bei Prozeßparametern wie beim ersten Ausführungsbeispiel eine dünnschichtige Gasaufkohlung durchgeführt, so daß, wie Fig. 2 veranschaulicht, sich jeweils eine Randschicht 5 mit einer mittleren Eindringtiefe Aₜ von etwa 0,7 mm ergab. Der Quotient aus der Aufkohlungstiefe Aₜ des Randbereiches 5 des thermochemisch behandelten Basisstahls und aus der Dicke D des Basismaterials nahm mittlere Werte um 0,25 an. Wie Fig. 2 weiterhin zeigt, lag der Kohlenstoffgehalt unmittelbar an den Deckflächen 2 etwa bei 0,7 Ma.-%. Der mit Kohlenstoff angereicherte Randbereich 5 des Basisstahls wies von der Deckfläche 2 zum nicht mit Kohlenstoff angereicherten Bereich 6 hin einen mittleren Kohlenstoffgradienten von etwa 0,46 bis 0,53 Ma.-% C/mm auf.

Die nachfolgende, im wesentlichen ebenfalls unter den gleichen Bedingungen wie im ersten Ausführungsbeispiel durchgeführte Härtung führte bei guter Planheit der Platte 1 des Basismaterials zu nur geringfügig vom ersten Ausführungsbeispiel abweichenden Härtewerten an den Deckflächen 2 bzw. im Kern 6. Nach einer Anlaßzeit von 3 Stunden bei einer als optimal ermittelten Temperatur von 300 °C wurden, wie Fig. 3 zeigt, auf der Deckfläche 2 Härtewerte von etwa 54 bis 55 HRC (ca. 670 HV) und im Kern 6 von etwa 38 HRC (380 HV) erreicht. Der mit Kohlenstoff angereicherte Randbereich 5 des Basismaterials wies von der Deckfläche 2 zum nicht oder nur wenig mit Kohlenstoff angereicherten Bereich 6 hin einen mittleren Härtegradienten von etwa 15 HRC/mm auf.

Das Basismaterial dieses Ausführungsbeispiels der Erfindung erscheint insbesondere zur Herstellung von Tisch- und Besäumersägen als Kreissägen mit geschränkten Zähnen von etwa 55 HRC geeignet. Die Härte bei üblichen aus Werkzeugstahl gefertigten derartigen Sägen liegt bei 43-44 HRC.

Aus dem erfindungsgemäßen Basismaterial wurde zur Bestimmung der statischen Biegesteifigkeit C ein Kreissägeblatt hergestellt. Die statische Biegesteifigkeit C des Sägeblattes ergibt sich dabei als Quotient aus einer im statischen Belastungsfall unter definierten Bedingungen aufgebrachten Biegekraft F und einer dadurch an der Belastungsstelle auftetenden Durchbiegung f. Das Sägeblatt besaß die in der Tabelle 2 unter der Nummer I aufgeführte Durchmesserabmessung D_{K} und Dicke D. Der Durchmesser D_{I} einer inneren kreisrunden Öffnung des Sägeblattes betrug 40 mm. Das Sägeblatt wurde mittels eines Flansches eingespannt, der einen Durchmesser D_{E} von 118 mm aufwies. Damit ergab sich als charakteristisches Verhältnis von Einspann- zu Sägendurchmesser D_{E}/D_{K} ein Wert von 0,34. Die Meßpunkte, an denen die Biegekraft F aufgebracht und an denen die Durchbiegung f gemessen wurde, befanden sich auf einem Meßkreis, der von der Außenkante des Flansches 95 mm entfernt lag. Die Biegekraft betrug 19,7 N und wurde an jeweils vier Punkten des Meßkreises auf der Vorder- und auf der Rückseite der Sägeblätter aufgebracht.

**Tabelle 2:**

| Sägeblatt-Abmessungen | | |
|---|---|---|
| Sägeblatt-Nr. | Durchmesser D_{K} in mm | Dicke D in mm |
| I | 330 | 2,4 |
| II | 350 | 2,5 |
| III | 351 | 2,5 |

Es wurde eine mittlere statische Biegesteifigkeit C von 143 N/mm bestimmt, die im Vergleich mit den Werten des dritten Ausführungsbeispiels in Tabelle 3 enthalten ist.

### Beispiel 3:

- Verwendetes Material:: 10 Ni 14 Kaltband geglüht
Probendicke: D = 2,5 bis 3,0 mm

Es wurde an mehreren Proben bei Prozeßparametern wie beim ersten Ausführungsbeispiel eine dünnschichtige Aufkohlung durchgeführt, wodurch, wie Fig. 2 veranschaulicht, sich jeweils eine Randschicht 5 mit einer mittleren Eindringtiefe Aₜ von etwa 0,5 bis 0,6 mm ergab. Der Quotient aus der Aufkohlungstiefe Aₜ des Randbereiches 5 des thermochemisch behandelten Basisstahls und aus der Dicke D des Basismaterials lag bei einem mittleren Wert von etwa 0,20. Fig. 2 zeigt weiterhin, daß der Kohlenstoffgehalt unmittelbar an den Deckflächen 2 etwa zwischen 0,60 bis 0,65 Ma.-% lag. Der mit Kohlenstoff angereicherte Randbereich 5 des Basisstahls wies von der Deckfläche 2 zum nicht mit Kohlenstoff angereicherten Bereich 6 hin einen mittleren Kohlenstoffgradienten von etwa 0,48 Ma.-% C/mm auf. Diese im Vergleich mit dem bekannten Stand der Technik geringen Gradientenwerte bewirken, daß nicht nur eine hohe Verschleißbeständigkeit an den Deckflächen 2, sondern auch integral hohe Festigkeitswerte des erfindungsgemäßen Basismaterials erreicht werden.

Die nachfolgende, im wesentlichen unter den gleichen Bedingungen wie im ersten Ausführungsbeispiel durchgeführte Härtung führte bei guter Planheit der Platte 1 des Basismaterials zu geringfügig niedrigeren Härtewerten als im ersten Ausführungsbeispiel. Nach einer Anlaßzeit von 3 Stunden bei einer Temperatur von 200° wurden, wie Fig. 3 zeigt, auf der Deckfläche 2 Härtewerte bis zu etwa 54 HRC (ca. 650 HV) und im Kern 6 von etwa 31 HRC (310 HV) erreicht. Der mit Kohlenstoff angereicherte Randbereich 5 des Basismaterials wies von der Deckfläche 2 zum nicht oder nur wenig mit Kohlenstoff angereicherten Bereich 6 hin einen mittleren Härtegradienten von etwa 17 bis 20 HRC/mm auf.

An sechs Proben der Abmessung 12,5 mm x 3 mm wurden nach dem Härten und Anlassen des aufgekohlten Basisstahls Zugfestigkeitsuntersuchungen durchgeführt. Dabei wurde ein mittlerer Wert der Zugfestigkeit Rₘ, von etwa 1550 N/mm² bestimmt. Im Vergleich dazu liegt die Zugfestigkeit eines gehärteten und angelassenen, für bekannte Basismaterialien eingesetzten Werkzeugstahles bei einen mittleren Wert Rₘ von etwa 1600 N/mm².

An weiteren sechs Proben der Abmessung 55 mm x 10 mm x 3 mm wurden nach dem Härten und Anlassen des aufgekohlten Basismaterials Schlagzähigkeitsuntersuchungen durchgeführt. Dabei wurde ein mittlerer Wert der Schlagzähigkeit von etwa 60 J/cm² bestimmt. Die Vergleichsuntersuchungen an sechs Proben des gehärteten, für bekannte Basismaterialien eingesetzten Werkzeugstahles ergaben einen mittleren Schlagzähigkeitswert von etwa 52 J/cm².

Diese Untersuchungen zeigen, daß mit dem erfindungsgemäßen Basismaterial mittlere Zugfestigkeitswerte Rₘ erzielbar sind, die etwa der Zugfestigkeit Rₘ bekannter Basismaterialien entsprechen, daß jedoch für die im Beanspruchungsfall der Stammblätter beim Schneidvorgang so wichtige Kenngröße der Schlagzähigkeit im Mittel um etwa 15 % höhere Werte als bei dem gehärteten Material auf der Basis von Werkzeugstahl erreicht werden können.

Durch metallographische Analysen konnte eine erfindungsgemäß optimale Gefügezusammensetzung des Basismaterials in verschiedenem Abstand von den Deckflächen 2 bestimmt werden. Solche Gefügestrukturen sind in Fig. 3 durch vier mikroskopische Gesichtsfelder 9, 10, 11, 12 schematisch angedeutet. Der mit Kohlenstoff angereicherte Randbereich 5 besteht aus einem angelassenem Mischgefüge (Gesichtsfelder 9, 10, 11). Dieses Mischgefüge enthält Martensit, zum Teil mit carbidischen Ausscheidungen, einen geringen Anteil an Restaustenit und Zwischenstufengefüge, wobei der Martensitanteil mit zunehmendem Abstand von den Deckflächen 2 in Richtung auf den nicht mit Kohlenstoff angereicherten Bereich 6 hin zunächst bis auf einen Maximalwert ansteigt (Gesichtsfeld 10) und danach im nicht mit Kohlenstoff angereicherten Bereich 6 nahezu verschwindet. Der Restaustenitanteil bzw. der Anteil an Zwischenstufengefüge nimmt mit zunehmendem Abstand von den Deckflächen 2 in Richtung auf den nicht mit Kohlenstoff angereicherten Bereich 6 hin zunächst bis auf einen lokalen Minimalwert ab (Gesichtsfeld 10), steigt danach geringfügig an (Gesichtsfeld 11), um schließlich in einem nicht oder nur geringfügig mit Kohlenstoff angereicherten Bereich 6 sehr stark zurückzugehen. Das Gesichtsfeld 12 zeigt im Kernbereich 6 eine ferritischperlitische Gefügestruktur, wie sie charakteristisch für das Grundgefüges des eingesetzten Basisstahls ist.

Im Hinblick auf die in dem erfindungsgemäßen Basismaterial auftretenden Eigenspannungen konnte festgestellt werden, daß diesbezüglich optimale Verhältnisse vorliegen, wenn nach dem Härten und Anlassen des thermochemisch behandelten Basisstahls der Randbereich 5 in einem Abstand von den Deckflächen 2, der kleiner als die Aufkohlungstiefe Aₜ ist, maximale Druckeigenspannungen im Bereich bis zu etwa 0,90 GPa, vorzugsweise im Bereich zwischen 0,40 und 0,75 GPa vorliegen. Im Gegensatz dazu treten bei einem bekannten auf der Basis von Werkzeugstahl hergestellten Basismaterial Zugeigenspannungen im äußeren Randbereich 5 auf. Diese Zugeigenspannungen begünstigen beim Betrieb der Sägen die Rißeinleitung und -ausbreitung, bzw. lösen diese Erscheinungen erst aus. Verbunden mit den beim oftmaligen Gebrauch des Werkzeugs sich wiederholenden Temperaturänderungen kann dies außerdem auch zu einer beschleunigten Werkstoffermüdung führen.

Weiterhin ist es vorteilhaft, wenn das Basismaterial nach dem Härten und Anlassen des thermochemisch behandelten Basisstahls in einem Abstand von den Deckflächen 2, der etwa gleich oder geringfügig größer als die Aufkohlungstiefe Aₜ ist, maximale Zugeigenspannungen im Bereich bis zu etwa 0,60 GPa, vorzugsweise aber nur im Bereich bis zu 0,20 GPa aufweist. Bei höheren auftretenden Zugeigenspannungen in diesem Bereich können sich leicht Härterisse im Werkstoff bilden. Insbesondere ist es daher von Vorteil, wenn mit zunehmendem Abstand von den Deckflächen 2 die Zugeigenspannungen wieder absinken und dann in einem Abstand von den Deckflächen 2, der größer als die Aufkohlungstiefe Aₜ ist, Druckeigenspannungen mit Maxima im Bereich bis zu etwa 0,30 GPa auftreten. Die erfindungsgemäße Eigensspannungsverteilung im Basismaterial kann unter Umständen ein Spannen von Sägeblättern mit Richthämmern oder Maschinen überflüssig machen.

Das Basismaterial dieses Ausführungsbeispiels der Erfindung erscheint insbesondere zur Herstellung von Kreissägen mit geschränkten Zähnen von bis zu etwa 57 HRC geeignet.

Aus dem erfindungsgemäßen Basismaterial wurden zur Bestimmung der statischen Biegesteifigkeit C zwei Kreissägeblätter hergestellt. Die statische Biegesteifigkeit C der Sägeblätter wurde nach der beim zweiten Beispiel beschriebenen Methode bestimmt. Die Sägeblätter besaßen die in der Tabelle 2 unter den Nummern II und III aufgeführten Durchmesserabmessungen D_{K} und Dicken D. Der Durchmesser D_{I} einer inneren kreisrunden Öffnung der Sägeblätter betrug wie im zweiten Beispiel 40 mm. Das Sägeblatt wurde mittels eines Flansches mit dem gleichen Durchmesser D_{E} wie im zweiten Beispiel eingespannt. Auch die Lage der Meßpunkte und die Höhe der Biegekraft waren mit dem zweiten Ausführungsbeispiel der Erfindung identisch. Die Mittelwerte der ermittelten Biegesteifigkeit enthält Tabelle 3. Die Anlaßtemperaturen lagen abweichend von dem oben dargestellten Wert bei etwa 180 °C (II) und bei etwa 220 °C (III).

**Tabelle 3:**

| Meßwerte der Biegesteifigkeit C | |
|---|---|
| Sägeblatt-Nr. | Biegesteifigkeit C in N/mm (Mittelwerte) |
| I | 143 |
| II | 147 |
| III | 142 |

Im allgemeinen sind je nach seiner Qualität für einen thermochemisch behandelten und gehärteten Basistahl unter Beachtung seiner Anlaßbeständigkeit Anlaßtemperaturen von 150 bis 350 °C zweckmäßig. Außer durch die technologischen Parameter der thermochemischen Behandlung und des Härtens können der Gefügeaufbau und die physikalischen Eigenschaften des Basismaterials, wie beispielsweise die Härteverlaufskurve, auch durch die Anlaßtemperatur und -zeit beeinflußt werden. So wurden an der Oberfläche dieser Proben Härtewerte von etwa 57 bis 58 HRC gemessen.

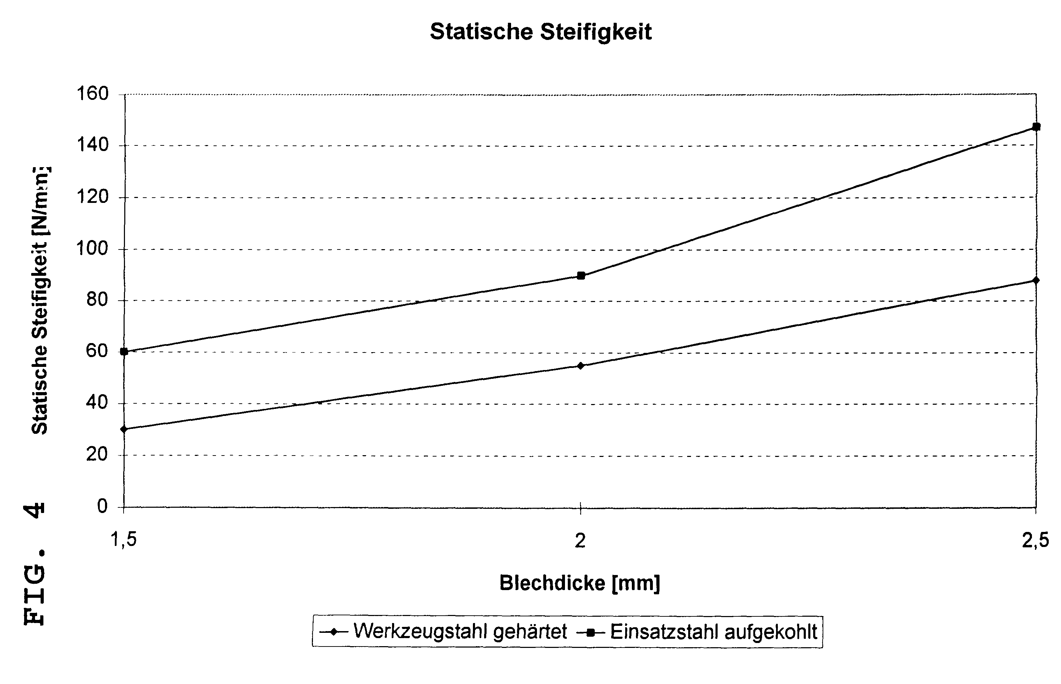

Aufgrund der in Tabelle 3 enthaltenen und weiterer ermittelter Werte ist vergleichsweise in Fig. 4 der Verlauf der statischen Biegesteifigkeit C eines herkömmlichen Basismaterials aus gehärtetem Werkzeugstahl und eines erfindungsgemäßen Basismaterials für ein charakteristisches Verhältnis von Einspann- zu Sägendurchmesser D_{E}/D_{K} = 0,34 bei unterschiedlichen Blechdicken D gegenübergestellt. Es zeigt sich, daß für Sägeblätter durch das erfindungsgemäßen Basismaterial die 1,5- bis zweifache Biegesteifigkeit C herkömmlicher Sägeblätter erreichbar ist.

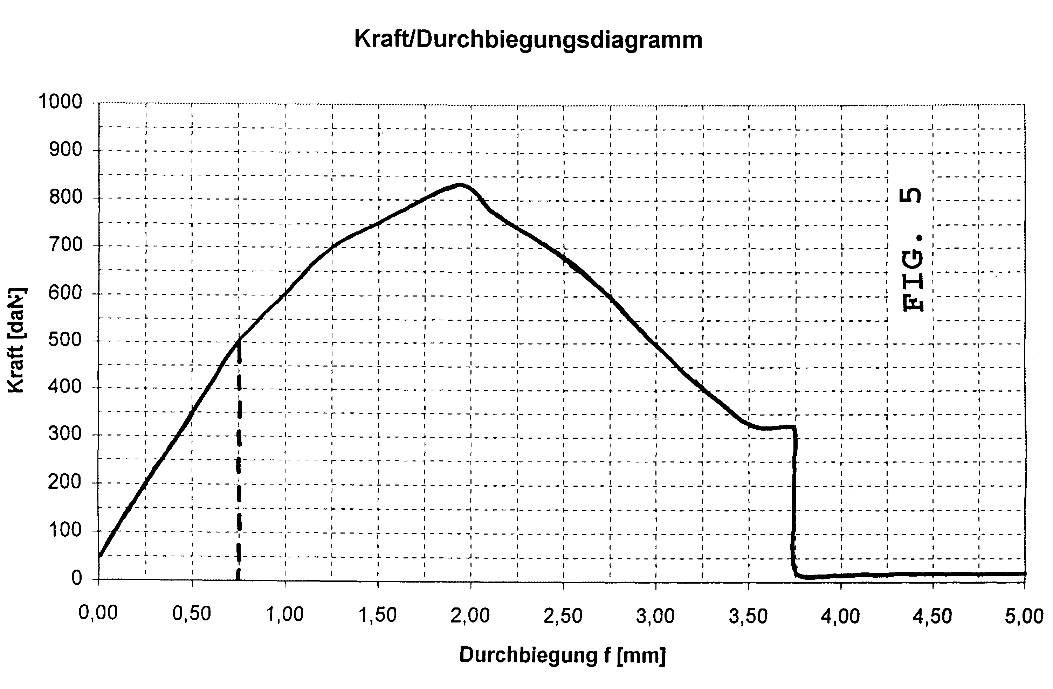

Fig. 5 zeigt das Ergebnis eines Dreipunkt-Biegeversuches an Flachproben von 15 mm Breite und 2,8 mm Dicke D eines entsprechend dem dritten Ausführungsbeispiel hergestellten erfindungsgemäßen Basismaterials. Der Auflagerabstand der Proben betrug dabei 30 mm. Die Darstellung gibt ein Kraft-Durchbiegungs-Diagramm wieder, das aus 1000 Meßwerten gewonnen wurde. Wie der Kurvenverlauf verdeutlicht, wird nach Überschreitung der Elastizitätsgrenze bei einer Durchbiegung f von etwa 0,75 mm mit etwa 810 daN bei einer Durchbiegung f von etwa 2,00 mm das Maximum der Biegekraft F erreicht. Die maximal auftretende Biegespannung liegt an dieser Stelle bei etwa 305 daN/mm². Bei abfallender Biegekraft F ist danach eine weitere Durchbiegung der Proben zu beobachten, was darauf hinweist, daß der bei einer Durchbiegung f von etwa 3,75 mm auftretende Bruch kein Schersondern ein Verformungsbruch ist. Ein solches Bruchverhalten des erfindungsgemäßen Basismaterials bietet für daraus hergestellte Sägeblätter usw. eine "Weglegechance", d.h. vor dem Auftreten des Bruches kann eine Auswechslung vorgenommen werden, wodurch sich die Arbeitssicherheit erhöht.

Zusammengefaßt besitzen die aus dem erfindungsgemäßen Basismaterial hergestellten Sägen, Trenscheiben usw. gegenüber den aus dem Stand der Technik bekannten folgende Vorteile:
- Durch den gleichmäßig eingebrachten Kohlenstoff lassen sich die Werkzeuge mit hoher Reproduzierbarkeit ihrer Eigenschaften herstellen.
- Die bisher unvermeidliche Entkohlung beim Warmwalzen und beim Härten kann ausgeglichen werden, wodurch ein Nachschleifen der Deckflächen entfällt. Beim Kaltwalzen kann unter Beachtung der bei der thermochemischen Behandlung auftretenden Änderung der Abmessungen die gewünschte Materialdicke D festgelegt werden.
- Durch eine gezielte thermochemische Behandlung und ggf. nachfolgende Warmbehandlung können aufgrund des graduierten Aufbaus bei gleicher Betriebs- bzw. Bruchsicherheit höhere Härten der Werkzeuge an der Oberfläche erzielt werden.
- Nach der thermochemischen Behandlung des Basisstahls kann durch ein Abschrecken bereits ein Härtegefüge mit feinkörniger Struktur erzeugt werden. Dadurch kann der nachfolgende Härteprozeß entfallen oder die physikalischen Eigenschaften können durch ein Doppelhärten noch weiter verbessert werden.
- Durch gezielte Auswahl der Behandlungsparameter bei der thermochemischen Behandlung, beim Härten und beim Anlassen besteht eine Vielzahl von Freiheitsgraden zur Erzeugung der erfindungsgemäßen Kohlenstoffprofile, Härteverlaufskurven, Eigenspannungs- und Gefügeverteilungen und in deren Folge der gewünschten Bauteileigenschaften.
- Die Warmrißbildung von Sägen reduziert sich sowohl beim Trennprozeß glühender Stahlprofile als auch bei Temperaturerhöhungen bei hohen Umfangsgeschwindigkeiten in der Metallverarbeitung. Insbesondere beim sogenannten Schmelzsägen.
- Durch den geringen Kohlenstoffgehalt im Kern vermindert sich die Gefahr einer für die Sicherheit des Bedienpersonals besorgniserregenden Aufhärtung bei ungewollter Wärmeeinbringung.
- Durch die unterschiedlichen Gefüge von Oberfläche und Kern und die damit verbundenen Volumenänderung beim Härten und Anlassen können bei der Gefügeumwandlung Druckspannungen an der Oberfläche erzeugt werden. Dementsprechend ergibt sich besonders im Hinblick auf den Eigenspannungszustand der Sägen eine starke aber kontrollierte Inhomogenität, die sich auf die Gebrauchseigenschaften vorteilhaft, insbesondere positiv auf eine verzögerte Werkstoffermüdung und auf eine geringere Rißanfälligkeit der Oberfläche auswirkt.
- Durch das erfindungsgemäße Basismaterial kann integral die Bauteilfestigkeit erhöht werden. Dadurch reduzieren sich die bei Gebrauch auftretenden Biegeschwingungen insbesondere bei hoher Drehzahl. Eine Verringerung der Schallemission ist die Folge. Alle bisherigen Maßnahmen zur Reduktion der Geräuschemission von Sägen bleiben von der Erfindung unberührt und können zusätzlich Verwendung finden.
- Die Dämpfungseigenschaften von Mischgefügen sind besser als von reinem Martensit. Eine weitere Geräuschreduktion ergibt sich.
- Aufgrund der höheren Bauteilfestigkeit kann die Blattstärke verringert werden. Daraus wiederum resultiert durch eine geringere mögliche Schnittfuge eine Reduzierung der Schnittverluste und damit eine Materialeinsparung an dem zu trennenden Werkstoff.
- Bei gleichbleibender Blattstärke ist es aufgrund des dann vergleichsweise steiferen Blattes möglich, bei höheren Schnittgeschwindigkeiten im Bereich von 25 bis 75 m/min zu arbeiten, wodurch sich die Schnittleistung bedeutend erhöht.
- Durch die erreichbaren hohen Härten der Sägen ist eine gewisse Substitution der bislang eingesetzten bestückten und stellitierten Sägen bzw. hartverchromter Gatter- und Kreissägen denkbar.
- Durch den ungleichmäßigen Härteverlauf quer zur Schnittrichtung (Sandwichstruktur) verschleißt ein Sägezahn über seinen Querschnitt mit unterschiedlicher Geschwindigkeit. Dadurch kann sich ein gewisser "Selbst-schärfeffekt" einstellen. Vorteile beim Nachschärfen der Säge sind ebenfalls zu verzeichnen.
- Durch das Auftreten eines Verformungsbruchmechanismus ist für aus dem erfindungsgemäßen Basismaterial hergestellte Sägeblätter eine "Weglegechance" gegeben, wodurch sich die Arbeitssicherheit erhöht.
- Durch eine partielle thermochemische Behandlung können die im Bereich von Löt- oder Schweißverbindungen störenden hohen Kohlenstoffgehalte vermieden werden. Gerade im Bereich der Steinbearbeitung ist dies ein wesentlicher Vorteil.
- Aufgrund des weicheren Kerns der Sägen ist es möglich, durch Einbringen eines Keils einen sogenannten gestauchten Zahn herzustellen. Dies war bislang zur bei Nickelstählen möglich.

### Bezugszeichen

- 1: Tafel aus Basismaterial
- 2: Deckfläche von 1
- 3: Stirnkantenfläche von 1
- 4: Längskantenfläche von 1
- 5: Randbereich
- 6: nicht mit Kohlenstoff angereicherter Bereich
- 7: Kontur von 8a, 8b
- 8a: Sägeblattrohling, Kreissäge
- 8b: Säqeblattrohling, Gattersäge
- 9: mikroskopisches Gesichtsfeld in 5
- 10: mikroskopisches Gesichtsfeld in 5
- 11: mikroskopisches Gesichtsfeld in 5
- 12: mikroskopisches Gesichtsfeld in 6

- Aₜ: Aufkohlungstiefe
- C: statische Biegesteifigkeit
- D: Dicke von 1
- D_{E}: Einspanndurchmesser
- D_{I}: Innendurchmesser
- D_{K}: Sägendurchmesser
- F: Biegekraft
- f: Durchbiegung
- Rₘ: Zugfestigkeit

## Patentansprüche

1. Basismaterial für die Herstellung von Stammblättern insbesondere für Kreissägen, Trennscheiben, Gattersägen sowie für Schneide- und Schabvorrichtungen, in Form einer Tafel (1), bestehend aus einem ausgehend von ihrer aus zwei Deckflächen (2), zwei Stirnkantenflächen (3) und zwei Längskantenflächen (4) gebildeten Oberfläche (2, 3, 4) mit Kohlenstoff angereicherten Basisstahl, wobei der Basistahl einen Grundkohlenstoffgehalt von weniger als 0,3 Ma.-% Kohlenstoff besitzt,
**dadurch gekennzeichnet,**
daß der Basisstahl infolge einer thermochemischen Behandlung von mindestens einer Deckfläche (2) der Tafel (1) ausgehend mit 0,5 bis 1,1 Ma.-% Kohlenstoff angereicherte Randbereiche (5) aufweist, die bei abfallendem Kohlenstoffgehalt in einen nicht oder nur wenig mit Kohlenstoff angereicherten Bereich (6) übergehen, wobei an den Kantenflächen (3, 4) die aus dem mit Kohlenstoff angereicherten Randbereich (5) und dem nicht mit Kohlenstoff angereicherten Bereich (6) gebildete Sandwichstruktur vorliegt und entsprechend einer ausgewählten Tiefe des mit Kohlenstoff angereicherten Randbereichs (5) nach einem Härten und einem Anlassen des thermochemisch behandelten Basisstahls höchstens etwa 50 % der Dicke (D) der Tafel (1) im wesentlichen die ursprüngliche Härte des Basisstahls oder eine geringfügig höhere Härte aufweisen und mindestens etwa 50 % der Dicke (D) der Tafel (1) eine höhere Härte aufweisen.

2. Basismaterial nach Anspruch 1,
**dadurch gekennzeichnet,**
daß der Basisstahl infolge einer thermochemischen Behandlung von beiden Deckflächen (2) ausgehend mit Kohlenstoff angereicherte Randbereiche (5) aufweist und das Basismaterial an den Kantenflächen (3, 4) die aus den beiden mit Kohlenstoff angereicherten Randbereichen (5) und dem nicht mit Kohlenstoff angereicherten Bereich (6) gebildete Sandwichstruktur besitzt.

3. Basismaterial nach Anspruch 1 oder 2,
**dadurch gekennzeichnet,**
daß das Basismaterial im Randbereich (5) zur Kohlenstoffanreicherung aufgekohlt ist.

4. Basismaterial nach Anspruch 1 oder 2,
**dadurch gekennzeichnet,**
daß das Basismaterial im Randbereich (5) zur Kohlenstoffanreicherung carbonitriert ist.

5. Basismaterial nach einem oder mehreren der Ansprüche 1 bis 4,
**dadurch gekennzeichnet,**
daß der Basisstahl ein unlegierter Baustahl ist.

6. Basismaterial nach einem oder mehreren der Ansprüche 1 bis 4,
**dadurch gekennzeichnet,**
daß das Basisstahl ein niedriglegierter Baustahl ist.

7. Basismaterial nach einem oder mehreren der Ansprüche 1 bis 6,
**dadurch gekennzeichnet,**
daß der Quotient aus einer Aufkohlungstiefe (Aₜ) des Randbereiches (5) des thermochemisch behandelten Basisstahls, in welcher der Kohlenstoffgehalt 0,35 Ma.-% beträgt, und aus der Dicke (D) des Basisstahls einen Wert von 0,15 bis 0,40 aufweist.

8. Basismaterial nach einem oder mehreren der Ansprüche 1 bis 7,
**dadurch gekennzeichnet,**
daß entsprechend der ausgewählten Tiefe des mit Kohlenstoff angereicherten Randbereichs (5) nach einem Härten und einem Anlassen des thermochemisch behandelten Basisstahls höchstens etwa 1/3 der Dicke (D) des Basismaterials im wesentlichen die ursprüngliche Härte des Basisstahls oder eine geringfügig höhere Härte aufweist und mindestens etwa 2/3 der Dicke (D) des Basismaterials eine höhere Härte aufweisen.

9. Basismaterial nach einem oder mehreren der Ansprüche 1 bis 8,
**dadurch gekennzeichnet,**
daß der mit Kohlenstoff angereicherte Randbereich (5) des Basisstahls von der Deckfläche (2) zum nicht mit Kohlenstoff angereicherten Bereich (6) hin einen mittleren Kohlenstoffgradienten von etwa 0,25 bis 0,75 Ma.-% C/mm, vorzugsweise von 0,40 bis 0,50 Ma.-% C/mm aufweist.

10. Basismaterial nach einem oder mehreren der Ansprüche 1 bis 9,
**dadurch gekennzeichnet,**
daß nach einem Härten und einem Anlassen des thermochemisch behandelten Basisstahls der mit Kohlenstoff angereicherte Randbereich (5) des Basismaterials von der Deckfläche (2) zum nicht mit Kohlenstoff angereicherten Bereich (6) hin einen mittleren Härtegradienten von etwa 10 bis 22 HRC/mm, vorzugsweise von 14 bis 18 HRC/mm aufweist.

11. Basismaterial nach einem oder mehreren der Ansprüche 1 bis 10,
**dadurch gekennzeichnet,**
daß nach einem Härten und einem Anlassen des thermochemisch behandelten Basisstahls der Bereich der Deckflächen (2) eine Härte von etwa 50 bis 63 HRC, vorzugsweise von 52 bis 55 HRC und der nicht mit Kohlenstoff angereicherte Bereich (6) eine Härte von 20 bis 40 HRC, vorzugsweise von 30 bis 35 HRC aufweisen.

12. Basismaterial nach einem oder mehreren der Ansprüche 1 bis 11,
**dadurch gekennzeichnet,**
daß nach einem Härten und einem Anlassen des thermochemisch behandelten Basisstahls der Randbereich (5) in einem Abstand von den Deckflächen (2), der kleiner
als die Aufkohlungstiefe (Aₜ) ist, maximale Druckeigenspannungen im Bereich bis zu etwa 0,90 GPa, vorzugsweise im Bereich zwischen 0,40 und 0,75 GPa, aufweist.

13. Basismaterial nach einem oder mehreren der Ansprüche 1 bis 12,
**dadurch gekennzeichnet,**
daß nach einem Härten und einem Anlassen des thermochemisch behandelten Basisstahls das Basismaterial in einem Abstand von den Deckflächen (2), der etwa gleich oder geringfügig größer als die Aufkohlungstiefe (Aₜ) ist, maximale Zugeigenspannungen im Bereich bis zu etwa 0,60 GPa, vorzugsweise im Bereich bis zu 0,20 GPa aufweist.

14. Basismaterial nach einem oder mehreren der Ansprüche 1 bis 13,
**dadurch gekennzeichnet,**
daß nach einem Härten und einem Anlassen des thermochemisch behandelten Basisstahls das Basismaterial in einem Abstand von den Deckflächen (2), der größer als die Aufkohlungstiefe (Aₜ) ist, maximale Druckeigenspannungen im Bereich bis zu etwa 0,30 GPa aufweist.

15. Basismaterial nach einem oder mehreren der Ansprüche 1 bis 14,
**dadurch gekennzeichnet,**
daß der mit Kohlenstoff angereicherten Randbereich (5), aus einem angelassenem Mischgefüge (9, 10, 11) besteht, welches, gegebenenfalls carbidische Ausscheidungen enthaltenden, Martensit, einen geringen Anteil Restaustenit und/oder Zwischenstufengefüge enthält, wobei der Martensitanteil mit zunehmendem Abstand von den Deckflächen (2) in Richtung auf den nicht mit Kohlenstoff angereicherten Bereich (6) hin zunächst bis auf einen Maximalwert (10) ansteigt und danach im nicht mit Kohlenstoff angereicherten Bereich (6) auf nahezu Null zurückgeht und wobei der Restaustenitanteil und/oder der Anteil an Zwischenstufengefüge mit zunehmendem Abstand von den Deckflächen (2) in Richtung auf den nicht mit Kohlenstoff angereicherten Bereich (6) hin zunächst bis auf einen lokalen Minimalwert (10) abnimmt, danach geringfügig ansteigt (11) und schließlich im nicht mit Kohlenstoff angereicherten Bereich (6) unter den lokalen Minimalwert (10) zurückgeht.

16. Basismaterial nach einem oder mehreren der Ansprüche 1 bis 15,
**dadurch gekennzeichnet,**
daß der Basisstahl im Bereich der Deckflächen (2) nur partiell thermochemisch behandelt ist.

17. Basismaterial nach einem oder mehreren der Ansprüche 1 bis 16,
**dadurch gekennzeichnet,**
daß die über die Dicke (D) des Basismaterials nicht oder nur geringfügig mit Kohlenstoff angereicherten Bereiche (6) und/oder die auf der Oberfläche (2, 3, 4) des Basismaterials nicht oder nur geringfügig mit Kohlenstoff angereicherten Bereiche (6) aus einem ferritisch-perlitischen Mischgefüge (12) des Rohmaterials und/ oder aus Bainit, vorzugsweise in seiner unteren Stufe, bestehen.

## Claims

1. Base material for producing saw blades, in particular for circular saws, cutting-off wheels, mill saws and for cutting and shaving devices, in the form of a plate (1), consisting of a base steel which is enriched with carbon starting from its surface (2, 3, 4), which is formed from two main faces (2), two end-edge faces (3) and two longitudinal-edge faces (4), the base steel having a basic carbon content of less than 0.3% by mass carbon, characterized in that the base steel, as a result of a thermochemical treatment, starting from at least one main face (2) of the plate (1) has boundary regions (5) which are enriched with from 0.5 to 1.1% by mass carbon and, as the carbon content drops, merge into a region (6) which is not enriched or is only slightly enriched with carbon, the sandwich structure which is formed from the carbon-enriched boundary region (5) and the region (6) which is not enriched with carbon being present at the edge faces (3, 4), and, depending on a selected depth of the carbon-enriched boundary region (5), after hardening and tempering of the thermochemically treated base steel, at most approximately 50% of the thickness (D) of the plate (1) exhibiting substantially the original hardness of the base steel or a slightly higher hardness, and at least approximately 50% of the thickness (D) of the plate (1) exhibiting a higher hardness.

2. Base material according to Claim 1, characterized in that the base steel, due to a thermochemical treatment, has carbon-enriched boundary regions (5) starting from both main faces (2), and the base material has the sandwich structure which is formed from the two carbon-enriched boundary regions (5) and the region (6) which is not enriched with carbon at the edge faces (3, 4).

3. Base material according to Claim 1 or 2, characterized in that the base material is carburized in the boundary region (5) for the purpose of carbon enrichment.

4. Base material according to Claim 1 or 2, characterized in that the base material is carbonitrided in the boundary region (5) for the purpose of carbon enrichment.

5. Base material according to one or more of Claims 1 to 4, characterized in that the base steel is an unalloyed structural steel.

6. Base material according to one or more of Claims 1 to 4, characterized in that the base steel is a low-alloy structural steel.

7. Base material according to one or more of Claims 1 to 6, characterized in that the quotient from a carburization depth (At) of the boundary region (5) of the thermochemically treated base steel, in which the carbon content is 0.35% by mass, and from the thickness (D) of the base steel is from 0.15 to 0.40.

8. Base material according to one or more of Claims 1 to 7, characterized in that, depending on the selected depth of the carbon-enriched boundary region (5), after hardening and tempering of the thermochemically treated base steel, at most approximately 1/3 of the thickness (D) of the base material exhibits substantially the original hardness of the base steel or a slightly higher hardness, and at least approximately 2/3 of the thickness (D) of the base material exhibits a higher hardness.

9. Base material according to one or more of Claims 1 to 8, characterized in that the carbon-enriched boundary region (5) of the base steel has a mean carbon gradient from the main face (2) towards the region (6) which is not enriched with carbon of approximately 0.25 to 0.75% by mass C/mm, preferably of 0.40 to 0.50% by mass C/mm.

10. Base material according to one or more of Claims 1 to 9, characterized in that, after hardening and tempering of the thermochemically treated base steel, the carbon-enriched boundary region (5) of the base material has a mean hardness gradient from the main face (2) towards the region (6) which is not enriched with carbon of approximately 10 to 22 HRC/mm, preferably of 14 to 18 HRC/mm.

11. Base material according to one or more of Claims 1 to 10, characterized in that, after hardening and tempering of the thermochemically treated base steel, the region of the main faces (2) has a hardness of approximately 50 to 63 HRC, preferably of 52 to 55 HRC, and the region (6) which is not enriched with carbon has a hardness of 20 to 40 HRC, preferably of 30 to 35 HRC.

12. Base material according to one or more of Claims 1 to 11, characterized in that, after hardening and tempering of the thermochemically treated base steel, the boundary region (5), at a distance from the main faces (2) which is less than the carburization depth (Aₜ), exhibits maximum residual compressive stresses in the range up to approximately 0.90 GPa, preferably in the range between 0.40 and 0.75 GPa.

13. Base material according to one or more of Claims 1 to 12, characterized in that, after hardening and tempering of the thermochemically treated base steel, the base material, at a distance from the main faces (2) which is approximately equal to or slightly greater than the carburization depth (Aₜ), exhibits maximum residual tensile stresses in the range up to approximately 0.60 GPa, preferably in the range up to 0.20 GPa.

14. Base material according to one or more of Claims 1 to 13, characterized in that, after hardening and tempering of the thermochemically treated base steel, the base material, at a distance from the main faces (2) which is greater than the carburization depth (Aₜ), exhibits maximum residual compressive stresses in the range up to approximately 0.30 GPa.

15. Base material according to one or more of Claims 1 to 14, characterized in that the carbon-enriched boundary region (5) consists of a tempered mixed structure (9, 10, 11) which contains martensite, possibly containing carbide precipitations, a small proportion of residual austenite and/or bainitic structure, the martensite content initially rising at increasing distance from the main faces (2) towards the region (6) which is not enriched with carbon, up to a maximum level (10), and then dropping back to virtually zero in the region (6) which is not enriched with carbon, and the residual austenite content and/or the content of bainitic structure falling at increasing distance from the main faces (2) towards the region (6) which is not enriched with carbon, up to a local minimum level (10), then rising (11) slightly, and finally dropping back below the local minimum level (10) in the region (6) which is not enriched with carbon.

16. Base material according to one or more of Claims 1 to 15, characterized in that the base steel is only partially thermochemically treated in the region of the main faces (2).

17. Base material according to one or more of Claims 1 to 16, characterized in that the regions (6) over the thickness (D) of the base material which are not enriched or are only slightly enriched with carbon and/or the regions (6) on the surface (2, 3, 4) of the base material which are not enriched or are only slightly enriched with carbon consist of a ferritic-pearlitic mixed structure (12) of the raw material and/or of bainite, preferably in its lower form.

## Revendications

1. Matière de base pour la fabrication de feuilles de départ, en particulier pour scies circulaires, disques de tronçonneuses, scies alternatives, ainsi que pour des dispositifs de découpage et de raclage, sous la forme d'une feuille (1) composée d'un acier de base enrichi en carbone en partant de sa surface (2, 3, 4) formée de deux grandes faces (2), de deux faces de champ de tête (3) et de deux faces de champ longitudinales (4), l'acier de base possédant une teneur initiale en carbone de moins de 0,3 % de carbone,
caractérisée en ce que
l'acier de base présente, par suite d'un traitement thermochimique d'au moins une grande face (2) de la feuille (1), des régions superficielles (5) enrichies à partir de 0,5 à 1,1% en masse de carbone et qui, avec la diminution de la teneur en carbone, se terminent dans une région (6) qui n'est pas enrichie ou est seulement peu enrichie en carbone, cependant que, sur les surfaces de champ (3, 4), on observe une structure sandwich formée de la région superficielle (5) enrichie en carbone et de la région (6) non enrichie en carbone, et, selon une profondeur choisie de la région superficielle (5) enrichie en carbone, après une trempe et un revenu de l'acier de base traité par traitement thermochimique, au maximum environ 50% de l'épaisseur (D) de la feuille (1) présentent sensiblement la dureté initiale de l'acier de base, ou une dureté légèrement plus élevée et au moins environ 50% de l'épaisseur (D) de la feuille (1) présentent une dureté plus élevée.

2. Matière de base selon la revendication 1,
caractérisée en ce que,
sous l'effet d'un traitement thermochimique, la matière de base possède des régions superficielles (5) enrichies en carbone en partant des deux grandes faces (2) et, sur les surfaces de champ (3, 4), la matière de base possède la structure en sandwich formée des régions superficielles enrichies en carbone (5) et de la région non enrichie en carbone (6).

3. Matière de base selon la revendication 1 ou 2,
caractérisée en ce que
la matière de base est carburée dans la région superficielle (5) pour l'enrichissement en carbone.

4. Matière de base selon la revendication 1 ou 2, caractérisée en ce que
la matière de base est carbonitrurée dans la région superficielle (5) pour l'enrichissement en carbone.

5. Matière de base selon une ou plusieurs des revendications 1 à 4, caractérisée en ce que
l'acier de base est un acier de construction non allié.

6. Matière de base selon une ou plusieurs des revendications 1 à 4, caractérisée en ce que
l'acier de base est un acier de construction faiblement allié.

7. Matière de base selon une ou plusieurs des revendications 1 à 6, caractérisé en ce que
le quotient de la profondeur de carburation (Aₜ) de la région superficielle (5) de l'acier de base traité par traitement thermochimique, dans laquelle la teneur en carbone est de 0, 35% en masse par l'épaisseur (D) de l'acier de base, a une valeur de 0,15 à 0,40.

8. Matière de base selon une ou plusieurs des revendications 1 à 7, caractérisée en ce que,
selon la profondeur choisie de la région superficielle (5) enrichie en carbone, après une trempe et un revenu de l'acier de base traité par traitement thermochimique, au maximum environ 1/3 de l'épaisseur (D) de la feuille présente sensiblement la dureté initiale de l'acier de base, ou une dureté légèrement plus élevée, et au moins environ 2/3 de l'épaisseur (D) de la feuille présentent une dureté plus élevée.

9. Matière de base selon une ou plusieurs des revendications 1 à 8, caractérisée en ce que
de la grande face (2) à la région (6) non enrichie en carbone, la région superficielle (5) enrichie en carbone de l'acier de base présente un gradient de carbone moyen d'environ 0,25 à 0,75 % en masse C/mm, de préférence de 0,40 à 0,50 % en masse C/mm.

10. Matière de base selon une ou plusieurs des revendications 1 à 9, caractérisée en ce que
après une trempe et un revenu de l'acier de base traité par traitement thermochimique, la région superficielle (5) enrichie en carbone de la matière de base présente, de la grande face (2) à la région non (6) enrichie en carbone, un gradient moyen de dureté d'environ 10 à 22 HRC/mm, de préférence de 14 à 18 HRC/mm.

11. Matière de base selon une ou plusieurs des revendications 1 à 10, caractérisée en ce que
après une trempe et un revenu de l'acier de base traité par traitement thermochimique, la région des grandes faces (2) possède une dureté d'environ 50 à 63 HRC, de préférence de 52 à 55 HRC et la région (6) non enrichie en carbone présente une dureté de 20 à 40 HRC, de préférence de 30 à 35 HRC.

12. Matière de base selon une ou plusieurs des revendications 1 à 11, caractérisée en ce que
après une trempe et un revenu de l'acier de base traité par traitement thermochimique, la région superficielle (5) possède, à une distance des grandes faces (2) plus petite que la profondeur de carburation (Aₜ), des tensions internes de compression maximales de l'intervalle allant jusqu'à environ 0,90 GPa, de préférence de l'intervalle d'entre 0,40 et 0,75 GPa.

13. Matière de base selon une ou plusieurs des revendications 1 à 12, caractérisée en ce que
après une trempe et un revenu de l'acier de base traité par traitement thermochimique, la matière de base possède, à une distance des grandes faces (2) qui est à peu près égale ou supérieure à la profondeur de carburation (Aₜ), des tensions internes de traction maximales de l'intervalle allant jusqu'à environ 0,60 GPa, de préférence de l'intervalle allant jusqu'à 0,20 GPa.

14. Matière de base selon une ou plusieurs des revendications 1 à 13, caractérisée en ce que
après une trempe et un revenu de l'acier de base traité par traitement thermochimique, la matière de base possède, à une distance des grandes faces (2) qui est supérieure à la profondeur de carburation (Aₜ), des tensions internes de compression maximales de l'intervalle allant jusqu'à environ 0,30 GPa.

15. Matière de base selon une ou plusieurs des revendications 1 a 4, caractérisée en ce que
la région superficielle (5) enrichie en carbone est composée d'une structure mixte revenue (9, 10, 11) qui contient de la martensite, contenant éventuellement des ségrégation carburées, une petite proportion d'austénite résiduelle et/ou une structure d'étage intermédiaire, la proportion de martensite croissant tout d'abord, avec l'accroissement de la distance aux grandes faces (2) en direction de la région (6) non enrichie en carbone, jusqu'à une valeur maximale (10), puis revenant presque à zéro dans la région non enrichie en carbone (6), la proportion d'austénite résiduelle et/ou la proportion de structure d'étage intermédiaire décroissant tout d'abord avec l'accroissement de la distance aux grandes faces (2) en direction de la région non enrichie en carbone (6), jusqu'à une valeur minimale locale (10), puis croissant légèrement (11) et revenant finalement au-dessous de la valeur minimale locale (10) dans la région non enrichie en carbone (6).

16. Matière de base selon une ou plusieurs des revendications 1 à 15, caractérisée en ce que
l'acier de base n'est traité par traitement thermochimique que partiellement dans la région des grandes faces (2).

17. Matière de base selon une ou plusieurs des revendications 1 à 16, caractérisée en ce que
les régions (6) non enrichies ou seulement peu enrichies en carbone sur l'épaisseur (D) de la matière de base et/ou les régions (6) non enrichies ou seulement peu enrichies en carbone sur la surface (2, 3, 4) de la matière de base sont composées d'une structure mixte (12) ferritique-perlitique de la matière première et/ou de bainite, de préférence dans son étage inférieur.
